# EUROPÄISCHE PATENTSCHRIFT

(11) **EP 2 603 907 B1**
(45) Veröffentlichungstag und Bekanntmachung des Hinweises auf die Patenterteilung: **29.10.2014**
(21) Anmeldenummer: 11760714.3
(22) Anmeldetag: 08.08.2011
(51) Int. Cl.: G08B 17/107, G08B 17/103, G08B 21/14, G01N 21/53

(54) **AUSWERTEN VON STREULICHTSIGNALEN BEI EINEM OPTISCHEN GEFAHRENMELDER SOWIE AUSGEBEN EINER STAUB- / DAMPF-WARNUNG ODER EINES BRANDALARMS**
EVALUATING SCATTERED-LIGHT SIGNALS IN AN OPTICAL HAZARD DETECTOR AND OUTPUTTING A DUST/STEAM WARNING OR A FIRE ALARM
ÉVALUATION DE SIGNAUX DE LUMIÈRE DIFFUSÉE DANS LE CAS D'UN AVERTISSEUR OPTIQUE DE DANGER, ET ÉMISSION D'UN AVERTISSEMENT DE PRÉSENCE DE POUSSIÈRE /VAPEUR OU D'UNE ALARME INCENDIE

(30) Priorität: 11.08.2010 DE 102010039230
(43) Veröffentlichungstag der Anmeldung: 19.06.2013
(73) Patentinhaber: Siemens Aktiengesellschaft, 80333 München (DE)
(72) Erfinder: COLE, Martin Terence, Patterson Lakes Victoria 3197 (AU)
(74) Vertreter: Maier, Daniel Oliver
(86) Internationale Anmeldenummer: PCT/EP2011/063591
(87) Internationale Veröffentlichungsnummer: WO 2012/019987

(56) Entgegenhaltungen:
- EP-A2- 0 877 345
- EP-A2- 2 112 639
- GB-A- 2 319 605

## Beschreibung

Die Erfindung betrifft ein Verfahren zur Auswertung zweier Streulichtsignale bei einem nach dem Streulichtprinzip arbeitenden optischen Gefahrenmelder. Die zu detektierenden Partikel werden mit Licht in einem ersten Wellenlängenbereich und mit Licht in einem zweiten Wellenlängenbereich bestrahlt. Das von den Partikeln gestreute Licht wird in ein erstes und zweites Streulichtsignal umgewandelt. Es werden die beiden Streulichtsignale in der Weise zueinander normiert, dass deren Amplitudenverlauf für grössere Partikel wie Staub und Dampf in etwa übereinstimmt. Weiterhin wird ein Amplitudenverhältnis zwischen den beiden Streulichtsignalen gebildet sowie ein Amplitudenvergleichswert festgelegt, welcher einer vorgebbaren Partikelgrösse im Übergangsbereich von Rauch zu Staub/Dampf entspricht. Die beiden die Streulichtsignale werden auf Brandkenngrössen hin weiterverarbeitet, abhängig vom aktuellen Vergleichsergebnis.

Weiterhin betrifft die Erfindung einen optischen Gefahrenmelder mit einer nach dem Streulichtprinzip arbeitenden Detektionseinheit und mit einer damit verbundenen elektronischen Auswerteeinheit. Die Detektionseinheit weist zumindest ein Leuchtmittel zum Bestrahlen von zu detektierenden Partikeln und zumindest einen optischen Empfänger zur Detektion des von den Partikeln gestreuten Lichts auf. Das von dem zumindest einen Leuchtmittel ausgesandte Licht liegt zumindest in einem ersten Wellenlängenbereich und in einem zweiten Wellenlängenbereich. Der zumindest eine optische Empfänger ist sensitiv für den ersten und/oder zweiten Wellenlängenbereich sowie zur Umwandlung des empfangenen gestreuten Lichts in ein erstes und zweites Streulichtsignal ausgebildet. Die Auswerteeinheit weist erste Mittel zur Normierung der beiden Streulichtsignale derart auf, dass deren Amplitudenverlauf für grössere Partikel wie Staub und Dampf in etwa übereinstimmt. Sie weist zweite Mittel zur Bildung eines Amplitudenverhältnisses zwischen den beiden Streulichtsignalen auf. Schliesslich weist sie dritte Mittel zum Vergleich eines Amplitudenvergleichswertes, welcher einer vorgebbaren Partikelgrösse im Übergangsbereich von Rauch zu Staub/Dampf entspricht, mit dem aktuell gebildeten Amplitudenverhältnis auf. Die dritten Mittel sind zudem zur Weiterverarbeitung der beiden Streulichtsignale auf Brandkenngrössen hin, abhängig vom aktuellen Vergleichsergebnis, eingerichtet.

Weiterhin ist allgemein bekannt, dass es sich bei Partikeln mit einer Grösse von mehr als 1 µm hauptsächlich um Staub handelt, während es sich bei Partikeln mit einer Grösse von weniger als 1 µm hauptsächlich um Rauch handelt.

Aus der EP 877 345 A2 ist ein Rauchmelder mit einer Lichtempfangseinrichtung zum zeitlich abwechselnden Empfangen von Streulicht zweier verschiedener Wellenlängen bekannt. Der Rauchmelder weist eine Recheneinrichtung zum Durchführen einer zur Rauchdetektion benötigten Berechnung aus den beiden Streulichtsignalen und eine Rauchdetektionsverarbeitungseinrichtung zum Durchführen eines Rauchdetektionsprozesses auf Grundlage einer Rechenergebnisausgabe der Recheneinrichtung auf. Die Recheneinrichtung weist Mittel zum Abschätzen eines Ausgabewerts entweder des ersten oder des zweiten Streulichtsignals auf, die zeitlich abwechselnd von der Lichtempfangseinrichtung ausgegeben werden. Ferner umfasst der Rauchmelder Mittel zur Ermittlung des Verhältnisses zwischen den beiden Streulichtsignalen für die Ermittlung der detektierten Partikelgrösse.

Ein derartiges Verfahren bzw. ein derartiger Gefahrenmelder ist aus der internationalen Veröffentlichung WO 2008/064396 A1 bekannt. In der Veröffentlichung wird zur Steigerung der Empfindlichkeit für die Detektion von Rauchpartikel vorgeschlagen, nur das zweite Streulichtsignal mit blauer Lichtwellenlänge auszuwerten, wenn das Amplitudenverhältnis einer Partikelgrösse von weniger als 1 µm entspricht. Entspricht dagegen das Amplitudenverhältnis einer Partikelgrösse von mehr als 1 µm, so wird die Differenz aus dem zweiten Streulichtsignal mit blauer Lichtwellenlänge und dem ersten Streulicht mit infraroter Lichtwellenlänge gebildet. Durch die Differenzbildung wird der Einfluss von Staub unterdrückt und somit die Auslösung eines Fehlalarms für das Vorliegen eines Brandes weitgehend unterdrückt.

Ausgehend von diesem Stand der Technik ist es eine Aufgabe der Erfindung, ein erweitertes Auswerteverfahren von Streulichtsignalen sowie einen verbesserten optischen Gefahrenmelder anzugeben.

Die Aufgabe der Erfindung wird durch die Gegenstände der unabhängigen Ansprüche gelöst. Vorteilhafte Verfahrensvarianten und Ausführungsformen der vorliegenden Erfindung sind in den abhängigen Ansprüchen angegeben.

Für das erfindungsgemässe Verfahren wird für den Fall, dass das Amplitudenverhältnis den Amplitudenvergleichswert übersteigt, zumindest hauptsächlich das erste Streulichtsignal ausgewertet sowie ein Staub-/Dampfdichte-Signal ausgegeben, und für den anderen Fall zumindest hauptsächlich das zweite Streulichtsignal ausgewertet sowie ein Rauchdichtesignal ausgegeben. Mit "hauptsächlich" ist gemeint, dass maximal ein Gewichtungsanteil von maximal 10% des jeweils anderen Streulichtsignals ausgewertet wird. Vorzugsweise wird ausschliesslich jeweils nur das eine Streulichtsignal ausgewertet.

Kernidee der vorliegenden Erfindung ist, dass neben der Ausgabe eines Rauchdichtesignals zur möglichen Weiterverarbeitung zusätzlich ein Staub-/Dampfdichte-Signal zur möglichen Weiterverarbeitung ausgegeben wird. Dieses Signal kann z.B. Aufschluss darüber geben, ob eine unzulässig hohe Staubdichte und/oder (Wasser-)Dampfdichte vorliegt. Eine zu hohe Staubdichte kann ein hohes Sicherheitsrisiko darstellen und z.B. die Ausbreitung eines Brandes beschleunigen oder Verpuffungen bzw. Explosionen begünstigen. Gleichfalls kann eine zu hohe Dampfdichte oder Wasserdampfdichte ein Hinweis auf ein Heisswasserleck, wie z.B. bei einer Heizungsanlage, sein. Das zusätzliche Staub-/Dampfdichte-Signal kann somit vorteilhaft weitere Informationen, insbesondere in Kombination mit dem Rauchdichtesignal, bezüglich eines zu überwachenden Bereichs liefern.

Nach einer ersten Verfahrensvariante werden die Partikel mit infrarotem Licht einer Wellenlänge von 600 bis 1000 nm, insbesondere mit einer Wellenlänge von 940 nm ± 20 nm, und mit blauem Licht einer Wellenlänge von 450 bis 500 nm, insbesondere mit einer Wellenlänge von 470 nm ± 20 nm, bestrahlt. Das Licht kann z.B. von einer einzigen Lichtquelle stammen, die zeitlich abwechselnd infrarotes Licht und blaues Licht aussendet. Es kann auch von zwei separaten Lichtquellen stammen, insbesondere von einer blauen Leuchtdiode und von einer Infrarot-Leuchtdiode. Besonders vorteilhaft ist dabei die Verwendung einer IR-Leuchtdiode mit einer Wellenlänge bei 940 nm ± 20 nm sowie einer blauen Leuchtdiode mit einer Wellenlänge 470 nm ± 20 nm.

Vorzugsweise weist die vorgebbare Partikelgrösse einen Wert im Bereich von 0.5 bis 1.1 µm, insbesondere einen Wert von etwa 1 µm auf. Nach einer weiteren Verfahrensvariante wird der Amplitudenvergleichswert auf einen Wert im Bereich von 0.8 bis 0.95, insbesondere auf einen Wert von 0.9, bzw. auf dessen Kehrwert festgelegt wird. Ein Wert von 0.9 entspricht dabei in etwa einer Partikelgrösse von 1 µm.

Einer weiteren Verfahrensvariante zufolge wird das Staub-/Dampfdichte-Signal mit einer ersten Signalschwelle verglichen. Bei Überschreiten wird das Staub-/Dampfdichte-Signal dann als Staub-/Dampf-Warnung ausgegeben. Weiterhin wird das Rauchdichtesignal mit einer zweiten Signalsschwelle verglichen und dieses Rauchdichtesignal bei Überschreiten als Brandalarm ausgegeben. Somit wird im normalen Betrieb ohne weitere Vorkommnisse keine Meldung ausgegeben. Dagegen wird in Abhängigkeit des Amplitudenverhältnisses bei zu hoher Partikeldichte entweder eine Staub-/Dampf-Warnung oder ein Brandalarm ausgeben. Die Ausgabe der jeweiligen Meldung kann auf optischem und/oder akustischem Wege erfolgen. Sie kann alternativ oder zusätzlich drahtgebunden und/oder drahtlos an eine Brandmeldezentrale ausgegeben werden.

Die Aufgabe der Erfindung wird weiterhin mit einem optischen Gefahrenmelder gelöst, dessen elektronische Auswerteeinheit vierte Mittel aufweist, die dazu eingerichtet sind, zumindest hauptsächlich das erste Streulichtsignal auszuwerten sowie ein Staub-/Dampfdichte-Signal für den Fall auszugeben, dass das Amplitudenverhältnis den Amplitudenvergleichswert übersteigt, und die für den anderen Fall dazu eingerichtet sind, zumindest hauptsächlich das zweite Streulichtsignal auszuwerten sowie ein Rauchdichtesignal auszugeben.

Die elektronische Auswerteeinheit kann eine analoge und/oder digitale elektronische Schaltung sein, welche z.B. A/D-Umsetzer, Verstärker, Komparatoren, Operationsverstärker für die Normierung der Streulichtsignale etc. aufweist. Im einfachsten Fall ist diese Auswerteeinheit ein Mikrocontroller, d.h. eine prozessorgestützte elektronische Verarbeitungseinheit, welcher üblicherweise "sowieso" zur gesamten Steuerung des Gefahrenmelders vorhanden ist. Die Mittel der Auswerteeinheit werden vorzugsweise durch Programmschritte nachgebildet, die vom Mikrocontroller ausgeführt werden, gegebenenfalls auch unter Heranziehung elektronisch hinterlegter Tabellenwerte z.B. für die Vergleichswerte und Signalschwellen. Ein entsprechendes Computerprogramm kann in einem nichtflüchtigen Speicher des Mikrocontrollers hinterlegt sein. Es kann alternativ von einem externen Speicher geladen werden. Weiterhin kann der Mikrocontroller einen oder mehrere integrierte A/D-Umsetzer zur messtechnischen Erfassung der beiden Streulichtsignale aufweisen. Er kann z.B. auch D/A-Umsetzer aufweisen, über welche die Strahlungsintensität zumindest einer der beiden Lichtquellen zur Normierung der beiden Streulichtsignale eingestellt werden kann.

Nach einer Ausführungsform des optischen Gefahrenmelders weist dessen elektronische Auswerteeinheit fünfte Mittel zum Vergleichen des Staub-/Dampfdichte-Signals mit einer ersten Signalschwelle und zum Vergleichen des Rauchdichtesignals mit einer zweiten Signalschwelle auf. Ferner weisen die fünften Mittel Signalisierungsmittel zum Signalisieren einer Staub-/Dampf-Warnung und eines Brandalarms beim jeweiligen Überschreiten der Signalschwelle auf.

Vorzugsweise ist der Gefahrenmelder ein Brandmelder und insbesondere ein Ansaugrauchmelder mit einem daran anschliessbaren Rohrsystem zur Überwachung der angesaugten Luft aus überwachungsbedürftigen Räumen und Einrichtungen.

Die Aufgabe wird mit den Gegenständen der unabhängigen Patentansprüche gelöst. Vorteilhafte Verfahrensvarianten und Ausführungsformen der vorliegenden Erfindung sind in den abhängigen Ansprüchen angegeben.

Die Erfindung sowie vorteilhafte Ausführungen der vorliegenden Erfindung werden am Beispiel der nachfolgenden Figuren erläutert. Dabei zeigen:
- FIG 1: jeweils den relativen Signalpegel eines Amplitudenverlaufs von beispielhaft infrarotem und blauem Streulicht, logarithmisch aufgetragen in µm und mit eingezeichneter durchschnittlicher Partikelgrösse von typischen Rauch- und Staubpartikeln,
- FIG 2: ein beispielhaftes Ablaufdiagramm gemäss einer Verfahrensvariante zur Erläuterung des erfindungsgemässen Verfahrens,
- FIG 3: ein Beispiel für einen erfindungsgemässen Gefahrenmelder gemäss einer ersten Ausführungsform und
- FIG 4: ein Beispiel für einen Gefahrenmelder gemäss einer zweiten Ausführungsform.

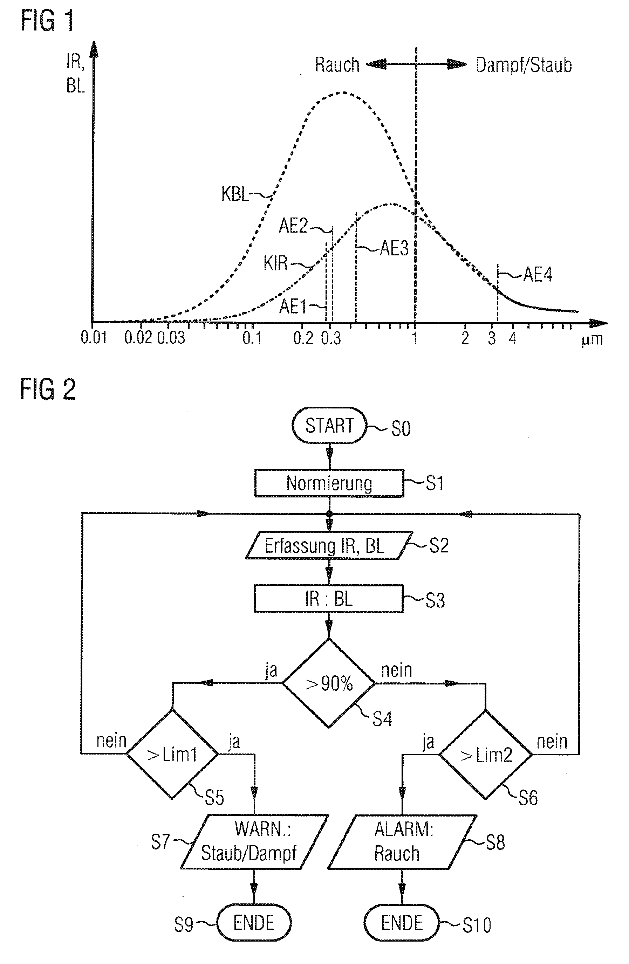

FIG 1 zeigt jeweils den relativen Signalpegel IR, BL eines Amplitudenverlaufs KIR, KBL von beispielhaft infrarotem und blauem Streulicht, logarithmisch aufgetragen in µm und mit eingezeichneten durchschnittlichen Partikelgrössen für beispielhafte Rauch- und Staubpartikel AE1-AE4 (Aerosole).

Mit AE1 ist die durchschnittliche Rauchpartikelgrösse für brennende Baumwolle bei ca. 0.28 µm, mit AE2 die Rauchpartikelgrösse für einen brennenden Docht bei ca. 0.31 µm, mit AE3 die Rauchpartikelgrösse für verbrannten Toast bei ca. 0.42 µm und mit AE3 die durchschnittliche Staubpartikelgrösse für Portland-Zement bei ca. 3.2 µm eingetragen. Eingetragen ist weiterhin eine gestrichelte Linie bei 1 µm, welche eine empirische Grenze zwischen Rauch und Staub/Dampf für typisch zu erwartende Partikel darstellt. Sie kann - je nach zu überwachender Umgebung - auch im Bereich von 0.5 bis 1.1 µm festgelegt werden.

Mit KIR ist der Amplitudenverlauf des infraroten Streulichtsignals IR mit einer Wellenlänge von 940 nm und mit KBL die Amplitudenverlauf des blauen Streulichtsignals BL mit einer Wellenlänge von 470 nm bezeichnet. Die beiden Streulichtsignale IR, BL sind in der gezeigten Darstellung bereits in der Weise zueinander normiert, dass deren Amplitudenverlauf für grössere Partikel wie Staub und Dampf in etwa übereinstimmt. Im vorliegenden Beispiel stimmt der Amplitudenverlauf für eine Partikelgrösse von mehr als 3 µm in etwa überein.

Wie die FIG 1 zeigt, wird das blaue Licht mehr an kleineren Partikeln und das infrarote Licht mehr an grösseren Partikeln gestreut.

FIG 2 zeigt ein beispielhaftes Ablaufdiagramm bereits gemäss einer Verfahrensvariante zur Erläuterung des erfindungsgemässen Verfahrens. Die einzelnen Schritte S1-S10 können durch geeignete Programmschritte eines Computerprogramms nachgebildet werden und auf einer prozessorgestützten Verarbeitungseinheit eines Gefahrenmelders, wie z.B. auf einem Mikrocontroller, ausgeführt werden.

Mit S0 ist ein Startschritt bezeichnet. In diesem Initialisierungsschritt kann z.B. ein Amplitudenvergleichswert festgelegt werden, welcher einer vorgebbaren Partikelgrösse im Übergangsbereich von Rauch zu Staub/Dampf entspricht, wie z.B. bei 1 µm. In diesem Schritt S0 können bereits auch Signalschwellen Lim1, Lim2 festgelegt werden, um aus einem ausgegebenen Staub-/Dampfdichte-Signal eine Staub-/Dampf-Warnung WARN oder aus einem ausgegebenen Rauchdichtesignal einen Brandalarm ALARM zu generieren bzw. auszugeben.

Im Schritt S1 werden die beiden Streulichtsignale IR, BL in der Weise zueinander normiert, dass deren Amplitudenverlauf für grössere Partikel wie Staub und Dampf in etwa übereinstimmt. Dieser Kalibrierungsprozess wird vorzugsweise im Rahmen der Inbetriebnahme eines Gefahrenmelders und gegebenenfalls später zyklisch wiederholt.

Im typischerweise normalen Betrieb des Gefahrenmelders wird im Schritt S2 das von den Partikeln gestreute Licht in das erste und zweite Streulichtsignal IR', BL' umgewandelt und somit erfasst.

Im Schritt S3 wird ein Amplitudenverhältnis zwischen den beiden Streulichtsignalen IR, BL gebildet. Im vorliegenden Fall wird beispielhaft das Verhältnis IR:BL gebildet. Alternativ kann auch der Kehrwert der beiden Streulichtsignale IR, BL gebildet werden.

Im Schritt S4 wird das aktuelle Amplitudenverhältnis mit dem vorgegebenen Amplitudenvergleichswert von beispielhaft 90% bzw. mit dem dessen Kehrwert für den Fall der reziproken Amplitudenverhältnisbildung verglichen.

Gemäss der bereits vorliegenden Verfahrenvariante wird in einem Schritt S5 bei positivem Vergleichsergebnis das ausgegebene Staub-/Dampfdichte-Signal noch mit der ersten Signalschwelle Lim1 verglichen. Bei Überschreiten wird schliesslich die Staub-/Dampf-Warnung WARN ausgegeben. Im anderen Fall wird zum Schritt S2 zurück verzweigt.

Weiterhin gemäss der vorliegenden Verfahrenvariante wird in einem Schritt S6 bei negativem Vergleichsergebnis das ausgegebene Rauchdichtesignal noch mit der zweiten Signalschwelle Lim2 verglichen und bei Überschreiten der Brandalarm ALARM ausgegeben. Im anderen Fall wird wieder zum Schritt S2 zurück verzweigt.

Mit S9 und S10 wird der jeweilige Endschritt bezeichnet.

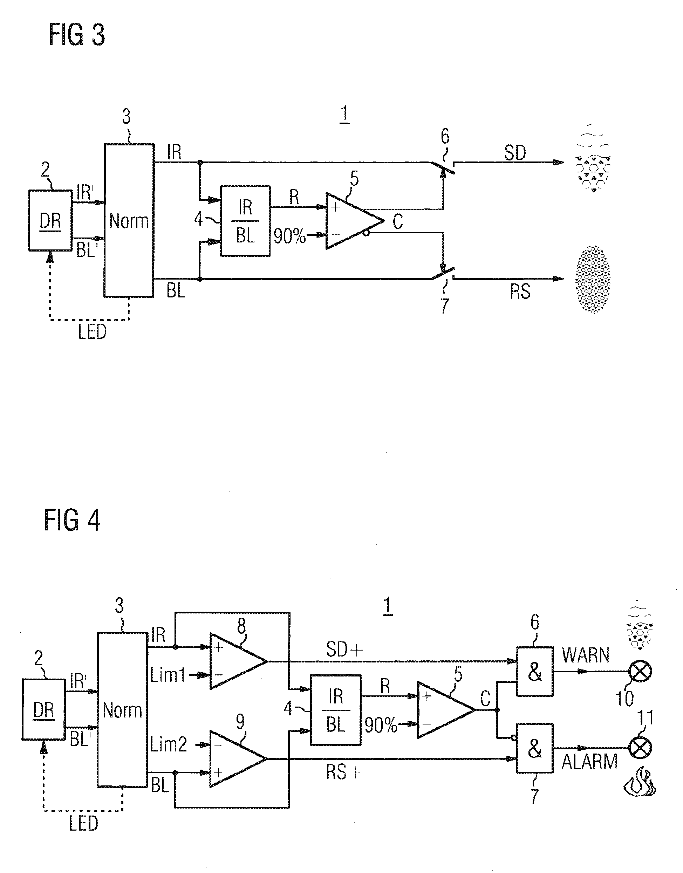

FIG 3 zeigt ein Beispiel für einen erfindungsgemässen Gefahrenmelder 1 gemäss einer ersten Ausführungsform.

Der optische Gefahrenmelder 1 ist insbesondere ein Brand- oder Rauchmelder. Er kann als Punktmelder ausgebildet sein. Er kann weiterhin ein Ansaugrauchmelder mit einem daran anschliessbaren Rohrsystem zur Überwachung der angesaugten Luft aus überwachungsbedürftigen Räumen und Einrichtungen sein. Weiterhin weist der Gefahrenmelder eine nach dem Streulichtprinzip arbeitenden Detektionseinheit 2 auf. Letztere kann z.B. in einer geschlossenen Messkammer mit einem darin befindlichen Detektionsraum DR angeordnet sein. In diesem Fall ist der Brand- oder Rauchmelder 1 ein geschlossener Brand- oder Rauchmelder. Alternativ oder zusätzlich kann der Brand- oder Rauchmelder 1 ein sogenannter offener Brand- oder Rauchmelder sein, der einen ausserhalb der Detektionseinheit 2 liegenden Detektionsraum DR aufweist.

Die Detektionseinheit 2 weist zumindest ein nicht weiter dargestelltes Leuchtmittel zum Bestrahlen von zu detektierenden Partikeln im Detektionsraum DR sowie zumindest einen optischen Empfänger zur Detektion des von den Partikeln gestreuten Lichts auf. Vorzugsweise weist die Detektionseinheit eine Infrarot-Leuchtdiode mit einer Wellenlänge im ersten Wellenlängenbereich von 600 bis 1000 nm, insbesondere mit einer Wellenlänge von 940 nm ± 20 nm, und eine blaue Leuchtdiode mit einer Wellenlänge im zweiten Wellenlängenbereich von 450 bis 500 nm, insbesondere mit einer Wellenlänge von 470 nm ± 20 nm als Leuchtmittel auf. Weiterhin weist die Detektionseinheit 2 zumindest einen optischen Empfänger auf, der sensitiv für den ersten und/oder zweiten Wellenlängenbereich ist und der dazu ausgebildet ist, das empfangene Streulicht in ein erstes und zweites (unnormiertes) Streulichtsignal IR', BL' umzuwandeln. Vorzugsweise ist ein solcher optischer Empfänger eine Photodiode oder ein Phototransistor. Die beiden Streulichtsignale IR', BL' können auch zeitversetzt durch einen einzigen für beiden Wellenlängenbereiche sensitiven optischen Empfänger gebildet werden. In diesem Fall werden die Partikel alternierend vorzugsweise mit dem blauen Licht und infrarotem Licht bestrahlt und synchronisiert dazu das erste und zweite Streulichtsignal IR', BL' gebildet.

Weiterhin weist der Gefahrenmelder 1 eine mit der Detektionseinheit 2 signal- oder datentechnisch verbundene Auswerteeinheit mit mehreren elektronischen Mitteln auf. Das erste Mittel 3 ist zur Normierung der beiden (unnormierten) Streulichtsignale IR', BL' zueinander vorgesehen, sodass deren Amplitudenverlauf für grössere Partikel wie Staub und Dampf in etwa übereinstimmt. Dieses erste Mittel 3 kann z.B. einstellbare Verstärker oder Dämpfungsglieder aufweisen, um die Signalpegel der beiden Streulichtsignale IR', BL' zueinander zu normieren. Es kann auch ein oder zwei Ausgangssignale LED bereitstellen, um die jeweilige Lichtintensität der beiden Leuchtmittel in der Detektionseinheit 2 so einzustellen, dass der Amplitudenverlauf der beiden Streulichtsignale IR', BL' für grössere Partikel wie Staub und Dampf wieder in etwa übereinstimmt. Mit IR, BL sind letztendlich die beiden normierten Streulichtsignale bezeichnet.

Die Auswerteeinheit weist weiterhin zweite Mittel 4 zur Bildung eines Amplitudenverhältnisses R zwischen den beiden Streulichtsignalen IR, BL auf. Im vorliegenden Beispiel ist dieses Mittel 4 ein analoger Dividierer.

Weiterhin weist die Auswerteinheit dritte Mittel 5 in Form eines Komparators auf. Die dritten Mittel 5 sind zum Vergleich eines Amplitudenvergleichswertes 90%, welcher einer vorgebbaren Partikelgrösse im Übergangsbereich von Rauch zu Staub/Dampf entspricht, mit dem aktuell gebildeten Amplitudenverhältnis R ausgebildet. Auf Basis dieses aktuellen Vergleichsergebnisses C erfolgt dann die Weiterverarbeitung der beiden Streulichtsignale IR, BL auf Brandkenngrössen hin.

Gemäss der vorliegenden Erfindung erfolgt die Weiterverarbeitung durch vierte Mittel 6, 7 der Auswerteeinheit. Diese Mittel 6 sind dazu eingerichtet, zumindest hauptsächlich das erste Streulichtsignal IR auszuwerten sowie ein Staub-/Dampfdichte-Signal SD für den Fall auszugeben, dass das Amplitudenverhältnis R den Amplitudenvergleichswert 90% übersteigt. Sie sind zudem für den anderen Fall dazu eingerichtet, zumindest hauptsächlich das zweite Streulichtsignal BL auszuwerten sowie ein Rauchdichtesignal RS auszugeben.

Im vorliegenden Fall ist eine besonders einfach realisierte Weiterverarbeitung der beiden Streulichtsignale IR, BL gezeigt, indem zwei ansteuerbare Schalter 6, 7 abhängig vom Vergleichsergebnis C ansteuert werden, um entweder das erste Streulichtsignal IR als Staub-/Dampfdichte-Signal SD durchzuschalten oder das zweite Streulichtsignal BL als Rauchdichtesignal RS durchzuschalten bzw. zu unterdrücken.

FIG 4 zeigt ein Beispiel für einen Gefahrenmelder 1 gemäss einer zweiten Ausführungsform. Diese Ausführungsform unterscheidet sich von der vorhergehenden dadurch, dass die beiden Streulichtsignale IR, BL noch jeweils mit einer vorgebbaren Signalschwelle Lim1, Lim2 verglichen werden. Dies erfolgt im vorliegenden Beispiel mittels zweier Komparatoren 8, 9. Ausgangsseitig stellen die beiden Komparatoren 8, 9 ein entsprechendes Steuersignal SD+, RS+ zur Verfügung, welches dann in Abhängigkeit vom Vergleichsergebnis C als Staub/Dampf-Warnung WARN oder als Brandalarm ALARM durchgeschaltet wird. Zusätzlich erfolgt im vorliegenden Beispiel eine Signalisierung der Warnung bzw. des Alarms durch Ansteuern einer optischen Alarmanzeige in Form zweier Lampen 10, 11.

Vorzugsweise werden sämtliche Komponenten der in FIG 3 und FIG 4 gezeigten Auswerteinheit durch eine prozessorgestützte Verarbeitungseinheit, wie z.B. durch einen Mikrocontroller, realisiert. Letzterer weist vorzugsweise integrierte A/D-Umsetzer zur Erfassung der beiden Streulichtsignale IR', BL' sowie D/A-Umsetzer und/oder digitale Ausgangsports für die Ausgabe des Rauchdichtesignals RS, des Staub/Dampfdichte-Signals SD sowie des Brandalarms ALARM und der Staub/Dampf-Warnung WARN auf. Die Mittel der Auswerteeinheit werden vorzugsweise durch geeignete Programmschritte nachgebildet, die dann auf dem Mikrocontroller ausgeführt werden.

### Bezugszeichenliste

- 1: Gefahrenmelder, Rauchmelder, Brandmelder
- 2: Detektionseinheit
- 3: erste Mittel, Mittel zur Normierung
- 4: zweite Mittel, Verhältnisbildner, Dividierer
- 5: dritte Mittel, Komparator
- 6, 7: vierte Mittel, Schalter, UND-Glieder
- 8, 9: Komparatoren

- AE1-AE4: Rauch- und Staubpartikel, Aerosole
- BL: zweites Streulichtsignal, blaues Licht
- BL': unnormiertes zweites Streulichtsignal
- C: Vergleichsergebnis
- DR: Detektionsraum
- IR: erstes Streulichtsignal, Infrarotlicht
- IR': unnormiertes erstes Streulichtsignal
- KIR, KBL: Amplitudenverlauf
- LED: Ausgangssignale für Leuchtmittel
- Lim1, Lim2: Signalschwelle
- R: Amplitudenverhältnis
- RS: Rauchdichtesignale
- S1-S10: Schritte
- SD: Staub-/Dampfdichte-Signal
- SD+, RS+: Schaltsignale
- 90%: Amplitudenvergleichswert

## Patentansprüche

1. Verfahren zur Auswertung zweier Streulichtsignale (IR, BL) bei einem nach dem Streulichtprinzip arbeitenden optischen Gefahrenmelder (1), wobei
- die zu detektierenden Partikel mit Licht in einem ersten und zweiten Wellenlängenbereich bestrahlt werden,
- das von den Partikeln gestreute Licht in ein erstes und zweites unnormiertes Streulichtsignal (IR', BL') umgewandelt wird,
- die beiden Streulichtsignale (IR', BL') derart zueinander normiert werden, dass deren Amplitudenverlauf für grössere Partikel wie Staub und Dampf in etwa übereinstimmt,
- ein Amplitudenverhältnis (R) zwischen den beiden normierten Streulichtsignalen (IR, BL) gebildet wird,
- ein Amplitudenvergleichswert (90%) festgelegt wird, welcher einer vorgebbaren Partikelgrösse im Übergangsbereich von Rauch zu Staub/Dampf entspricht,
- die normierten Streulichtsignale (IR, BL) auf Brandkenngrössen hin weiterverarbeitet werden, abhängig vom aktuellen Vergleichsergebnis (C) mit dem Amplitudenvergleichswert (90%), **dadurch gekennzeichnet, dass** für den Fall, dass das Amplitudenverhältnis (R) den Amplitudenvergleichswert (90%) übersteigt, das erste normierte Streulichtsignal (IR) ausgewertet wird sowie ein Staub-/Dampfdichte-Signal (SD) ausgegeben wird, und dass für den anderen Fall das zweite normierte Streulichtsignal (BL) ausgewertet wird sowie ein Rauchdichtesignal (RS) ausgegeben wird.

2. Verfahren nach Anspruch 1, wobei die Partikel mit infrarotem Licht einer Wellenlänge von 600 bis 1000 nm, insbesondere mit einer Wellenlänge von 940 nm ± 20 nm, und mit blauem Licht einer Wellenlänge von 450 bis 500 nm, insbesondere mit einer Wellenlänge von 470 nm ± 20 nm, bestrahlt werden.

3. Verfahren nach Anspruch 1 oder 2, wobei die vorgebbare Partikelgrösse einen Wert im Bereich von 0.5 bis 1.1 µm, insbesondere einen Wert von etwa 1 µm aufweist.

4. Verfahren nach einem der vorherigen Ansprüche, wobei der Amplitudenvergleichswert (90%) auf einen Wert im Bereich von 0.8 bis 0.95, insbesondere auf einen Wert von 0.9, bzw. auf dessen Kehrwert festgelegt wird.

5. Verfahren nach einem der vorherigen Ansprüche, wobei
- das normierte Staub-/Dampfdichte-Signal (SD) mit einer ersten Signalschwelle (Lim1) verglichen wird und bei Überschreiten sowie gleichzeitigen Eintritt des ersten Falles als Staub-/Dampf-Warnung (WARN) ausgegeben wird,
- das normierte Rauchdichtesignal (RS) mit einer zweiten Signalschwelle (Lim2) verglichen wird und bei Überschreiten sowie gleichzeitigen Eintritt des anderen Falles als Brandalarm (ALARM) ausgegeben wird.

6. Optischer Gefahrenmelder mit einer nach dem Streulichtprinzip arbeitenden Detektionseinheit (2) und mit einer damit verbundenen elektronischen Auswerteeinheit, wobei
- die Detektionseinheit (2) zumindest ein Leuchtmittel zum Bestrahlen von zu detektierenden Partikeln und mit zumindest einen optischen Empfänger zur Detektion des von den Partikeln gestreuten Lichts aufweist, wobei das von dem zumindest einen Leuchtmittel ausgesandte Licht in einem ersten Wellenlängenbereich und in einem zweiten Wellenlängenbereich liegt und wobei der zumindest eine optische Empfänger sensitiv für den ersten und/oder zweiten Wellenlängenbereich ist sowie zur Umwandlung des empfangenen gestreuten Lichts in ein erstes und zweites unnormiertes Streulichtsignal (IR', BL') ausgebildet ist,
- die elektronische Auswerteeinheit aufweist
- erste Mittel (3) zur Normierung der beiden unnormierten Streulichtsignale (IR', BL'), sodass deren Amplitudenverlauf für grössere Partikel wie Staub und Dampf in etwa übereinstimmt,
- zweite Mittel (4) zur Bildung eines Amplitudenverhältnisses (R) zwischen den beiden normierten Streulichtsignalen (IR, BL),
- dritte Mittel (5) zum Vergleich des aktuell gebildeten Amplitudenverhältnisses (R) mit, einem Amplitudenvergleichswert (90%), welcher einer vorgebbaren Partikelgrösse im Übergangsbereich von Rauch zu Staub/Dampf entspricht, sowie zur Weiterverarbeitung der beiden Streulicht signale (IR, BL) auf Brandkenngrössen hin, abhängig vom aktuellen Vergleichsergebnis (C),
**dadurch gekennzeichnet, dass** die elektronische Auswerteeinheit vierte Mittel (6) aufweist, die dazu eingerichtet sind, das erste normierte Streulichtsignal (IR) auszuwerten sowie ein Staub-/Dampfdichte-Signal (SD) für den Fall auszugeben,
dass das Amplitudenverhältnis (R) den Amplitudenvergleichswert (90%) übersteigt, und die für den anderen Fall dazu eingerichtet sind, das zweite normierte Streulichtsignal (BL) auszuwerten sowie ein Rauchdichtesignal (RS) auszugeben.

7. Optischer Gefahrenmelder nach Anspruch 6, wobei die Detektionseinheit (2) eine Infrarot-Leuchtdiode mit einer Wellenlänge im ersten Wellenlängenbereich von 600 bis 1000 nm, insbesondere mit einer Wellenlänge von 940 nm ± 20 nm, und eine blaue Leuchtdiode mit einer Wellenlänge im zweiten Wellenlängenbereich von 450 bis 500 nm, insbesondere mit einer Wellenlänge von 470 nm ± 20 nm, aufweist.

8. Optischer Gefahrenmelder nach Anspruch 6 oder 7, wobei die vorgebbare Partikelgrösse einen Wert im Bereich von 0.5 bis 1.1 µm, insbesondere einen Wert von etwa 1 µm aufweist.

9. Optischer Gefahrenmelder nach einem der Ansprüche 6 bis 8, wobei der Amplitudenvergleichswert (90%) auf einen Wert im Bereich von 0.8 bis 0.95, insbesondere auf einen Wert von 0.9, bzw. auf dessen Kehrwert festgelegt ist.

10. Optischer Gefahrenmelder nach einem der Ansprüche 6 bis 9, wobei die elektronische Auswerteeinheit fünfte Mittel (8, 9) aufweist, zum Vergleichen des normierten Staub-/Dampfdichte-Signals (SD) mit einer ersten Signalschwelle (Lim1) und zum Vergleichen des normierten Rauchdichtesignals (RS) mit einer zweiten Signalschwelle (Lim2) sowie Signalisierungsmittel (10, 11) zum Signalisieren einer Staub-/Dampf-Warnung (WARN) beim Überschreiten der ersten Signalschwelle (Lim1, Lim2) und gleichzeitigen Eintritt des ersten Falles und zum Signalisieren eines Brandalarms (ALARM) beim Überschreiten der zweiten Signalschwelle (Lim2) und gleichzeitigen Eintritt des anderen Falles.

## Claims

1. Method for evaluating two scattered-light signals (IR, BL) in an optical danger detector (1) operating according to the scattered-light principle, wherein
- the particles to be detected are irradiated with light in a first and second wavelength range,
- the light scattered by the particles is converted into a first and a second non-normalised scattered-light signal (IR', BL'),
- the two scattered-light signals (IR', BL') are normalised in respect of one another such that their amplitude profile approximately corresponds for larger particles such as dust and steam,
- an amplitude ratio (R) is formed between the two normalised scattered-light signals (IR, BL),
- an amplitude comparison value (90%) is defined, which corresponds to a predeterminable particle dimension in the cross-over area from smoke to dust/steam,
- the normalised scattered-light signals (IR, BL) are further processed for fire characteristic values, depending on the current comparison result (C) with the amplitude comparison value (90%),
**characterised in that**, in the event of the amplitude ratio (R) exceeding the amplitude comparison value (90%), the first normalised scattered-light signal (IR) is evaluated and also a dust/steam density signal (SD) is outputted, and that otherwise the second normalised scattered-light signal (BL) is evaluated and also a smoke density signal (RS) is outputted.

2. Method according to claim 1, wherein the particles are irradiated with infrared light of a wavelength from 600 to 1000 nm, especially with a wavelength of 940 nm ± 20 nm, and with blue light of a wavelength from 450 to 500 nm, especially with a wavelength of 470 nm ± 20 nm.

3. Method according to claim 1 or 2, wherein the predeterminable particle dimension has a value ranging from 0.5 to 1.1 µm, especially a value of approximately 1 µm.

4. Method according to one of the preceding claims, wherein the amplitude comparison value (90%) is defined as a value ranging from 0.8 to 0.95, especially as a value of 0.9, or as its reciprocal value.

5. Method according to one of the preceding claims, wherein
- the normalised dust/steam density signal (SD) is compared with a first signal limit (Lim1) and, if it exceeds this limit and if the first case occurs simultaneously, is outputted as a dust/steam warning (WARN),
- the normalised smoke density signal (RS) is compared with a second signal limit (Lim2) and, if it exceeds this limit and if the other case occurs simultaneously, is outputted as a fire alarm (ALARM).

6. Optical danger detector with a detection unit (2) operating according to the scattered-light principle, and with an electronic evaluation unit connected thereto, wherein
- the detection unit (2) has at least one means of illumination for irradiating particles to be detected and has at least one optical receiver for detection of the light scattered by the particles, wherein the light emitted by the at least one means of illumination lies in a first wavelength range and in a second wavelength range and wherein the at least one optical receiver is sensitive to the first and/or second wavelength range as well as being embodied for converting the received scattered light into a first and second non-normalised scattered-light signal (IR', BL'),
- the electronic evaluation unit has
- first means (3) for normalising the two non-normalised scattered-light signals (IR', BL') so that their amplitude profile approximately corresponds for larger particles such as dust and steam,
- second means (4) for forming an amplitude ratio (R) between the two normalised scattered-light signals (IR, BL),
- third means (5) for comparing the currently formed amplitude ratio (R) with an amplitude comparison value (90%), which corresponds to a predeterminable particle dimension in the cross-over area from smoke to dust/steam, as well as for further processing of the two scattered-light signals (IR, BL) for fire characteristic values, depending on the current comparison result (C), **characterised in that** the electronic evaluation unit has fourth means (6) which are configured at least mainly to evaluate the first normalised scattered-light signal (IR) and to output a dust/steam density signal (SD) in the event of the amplitude ratio (R) exceeding the amplitude comparison value (90%), and which are configured otherwise at least mainly to evaluate the second normalised scattered-light signal (BL) and to output a smoke density signal (RS).

7. Optical danger detector according to claim 6, wherein the detection unit (2) has an infrared light-emitting diode with a wavelength in the first wavelength range of 600 to 1000 nm, especially with a wavelength of 940 nm ± 20 nm, and a blue light-emitting diode with a wavelength in the second wavelength range of 450 to 500 nm, especially with a wavelength of 470 nm ± 20 nm.

8. Optical danger detector according to claim 6 or 7, wherein the predeterminable particle dimension has a value in the range of 0.5 to 1.1 µm, especially a value of approximately 1 µm.

9. Optical danger detector according to one of claims 6 to 8, wherein the amplitude comparison value (90%) is defined as a value ranging from 0.8 to 0.95, especially as a value of 0.9, or as its reciprocal value.

10. Optical danger detector according to one of claims 6 to 9, wherein the electronic evaluation unit has fifth means (8, 9) for comparing the normalised dust/steam density signal (SD) with a first signal limit (Lim1) and for comparing the normalised smoke density signal (RS) with a second signal limit (Lim2) as well as signalling means (10, 11) for signalling a dust/steam warning (WARN) when the first limit value (Lim1, Lim2) is exceeded and the first case occurs simultaneously and for signalling a fire alarm (ALARM) when the second signal limit (Lim2) is exceeded and the other case occurs simultaneously.

## Revendications

1. Procédé d'évaluation de deux signaux de lumière diffusée (IR, BL) par un avertisseur optique de danger (1) fonctionnant sur le principe de la lumière diffusée, dans lequel
- les particules à détecter sont exposées à de la lumière dans des première et seconde plages de longueur d'onde,
- la lumière diffusée par les particules est convertie en des premier et second signaux de lumière diffusée non normalisés (IR', BL'),
- les deux signaux de lumière diffusée (IR', BL') sont normalisés l'un par rapport à l'autre de sorte que leurs caractéristiques d'amplitude pour des particules de plus grande taille comme de la poussière et de la vapeur coïncident approximativement,
- un rapport d'amplitude (R) est constitué entre les deux signaux de lumière diffusée normalisés (IR, BL),
- une valeur de comparaison d'amplitude (90 %) est fixée, qui correspond à une taille de particule pouvant être prédéfinie dans une plage de transition de la fumée à la poussière/vapeur,
- les signaux de lumière diffusée normalisés (IR, BL) sont retraités en s'appuyant sur des paramètres caractéristiques d'incendie, en fonction d'un résultat de comparaison (C) courant avec la valeur de comparaison d'amplitude (90 %), **caractérisé en ce que**, dans le cas où le rapport d'amplitude (R) dépasse la valeur de comparaison d'amplitude (90 %), le premier signal de lumière diffusée normalisé (IR) est évalué et un signal de densité optique de poussière/vapeur (SD) est émis, et, dans l'autre cas, le second signal de lumière diffusée normalisé (BL) est évalué et un signal de densité optique de fumée (RS) est émis.

2. Procédé selon la revendication 1, dans lequel les particules sont exposées à de la lumière infrarouge ayant une longueur d'onde de 600 à 1 000 nm, en particulier ayant une longueur d'onde de 940 nm ± 20 nm, et à de la lumière bleue ayant une longueur d'onde de 450 à 500 nm, en particulier ayant une longueur d'onde de 470 nm ± 20 nm.

3. Procédé selon la revendication 1 ou 2, dans lequel la taille de particule pouvant être prédéfinie présente une valeur dans la plage de 0,5 à 1,1 µm, en particulier une valeur d'environ 1 µm.

4. Procédé selon l'une quelconque des revendications précédentes, dans lequel la valeur de comparaison d'amplitude (90 %) est fixée à une valeur dans la plage de 0,8 à 0,95, en particulier à une valeur de 0,9, ou bien à sa valeur réciproque.

5. Procédé selon l'une quelconque des revendications précédentes, dans lequel
- le signal de densité optique de poussière/de vapeur normalisé (SD) est comparé à un premier seuil de signal (Lim1) et, en cas de dépassement ainsi que de survenue simultanée du premier cas, est émis sous forme d'avertissement de présence de poussière/vapeur (WARN),
- le signal de densité optique de fumée normalisé (RS) est comparé à un second seuil de signal (Lim2) et, en cas de dépassement ainsi que de survenue simultanée de l'autre cas, est émis sous forme d'alarme incendie (ALARM).

6. Avertisseur optique de danger comprenant une unité de détection (2) travaillant selon le principe de la lumière diffusée et une unité d'évaluation électronique reliée à celle-ci, dans lequel
- l'unité de détection (2) présente au moins un moyen d'éclairage pour exposer des particules à détecter à de la lumière et au moins un récepteur optique destiné à une détection de la lumière diffusée par les particules, dans lequel la lumière émise par le au moins un moyen d'éclairage se situe dans une première plage de longueur d'onde et dans une seconde plage de longueur d'onde et dans lequel le au moins un récepteur optique est sensible aux première et/ou seconde plages de longueur d'onde, ainsi que destiné à une conversion de la lumière diffusée reçue en des premier et second signaux de lumière diffusée non normalisés (IR', BL'),
- l'unité d'évaluation électronique présente
- un premier moyen (3) destiné à la normalisation des deux signaux de lumière diffusée non normalisés (IR', BL'), de sorte que leurs caractéristiques d'amplitude coïncident approximativement pour de plus grandes particules comme la poussière et la vapeur,
- un deuxième moyen (4) destiné à la constitution d'un rapport d'amplitude (R) entre les deux signaux de lumière diffusée normalisés (IR, BL),
- un troisième moyen (5) destiné à une comparaison du rapport d'amplitude (R) couramment constitué avec une valeur de comparaison d'amplitude (90 %), qui correspond à une taille de particule pouvant être prédéfinie dans une plage de transition de la fumée à la poussière/vapeur, ainsi que destiné au retraitement des deux signaux de lumière diffusée (IR, BL) en s'appuyant sur des paramètres caractéristiques d'incendie, en fonction du résultat de comparaison (C) courant,
**caractérisé en ce que** l'unité d'évaluation électronique présente un quatrième moyen (6), qui est fourni pour évaluer le premier signal de lumière diffusée normalisé (IR) ainsi que pour émettre un signal de densité optique de poussière/vapeur (SD) dans le cas où le rapport d'amplitude (R) dépasse la valeur de comparaison d'amplitude (90 %), et qui, dans l'autre cas, sont fournis pour évaluer le second signal de lumière diffusée normalisé (BL) ainsi que pour émettre un signal de densité optique de fumée (RS).

7. Avertisseur optique de danger selon la revendication 6, dans lequel l'unité de détection (2) présente une diode lumineuse infrarouge ayant une longueur d'onde dans une première plage de longueur d'onde de 600 à 1 000 nm, en particulier ayant une longueur d'onde de 940 nm ± 20 nm, et une diode lumineuse bleue ayant une longueur d'onde dans une seconde plage de longueur d'onde de 450 à 500 nm, en particulier ayant une longueur d'onde de 470 nm ± 20 nm.

8. Avertisseur optique de danger selon la revendication 6 ou 7, dans lequel la taille de particule pouvant être prédéfinie présente une valeur dans la plage de 0,5 à 1,1 µm, en particulier une valeur d'environ 1 µm.

9. Avertisseur optique de danger selon l'une quelconque des revendications 6 à 8, dans lequel la valeur de comparaison d'amplitude (90 %) est fixée à une valeur dans la plage de 0,8 à 0,95, en particulier à une valeur de 0,9, ou bien à sa valeur réciproque.

10. Avertisseur optique de danger selon l'une quelconque des revendications 6 à 9, dans lequel l'unité d'évaluation électronique présente un cinquième moyen (8, 9), destiné à une comparaison du signal de densité optique de poussière/vapeur normalisé (SD) à un premier seuil de signal (Lim1) et destiné à une comparaison du signal de densité optique de fumée normalisé (RS) à un second seuil de signal (Lim2) ainsi qu'un moyen de signalisation (10, 11) destiné à une signalisation d'un avertisseur de présence de poussière/vapeur (WARN) en cas de dépassement du premier seuil de signal (Lim1, Lim2) et survenue simultanée du premier cas et destiné à une signalisation d'une alarme incendie (ALARM) en cas de dépassement du second seuil de signal (Lim2) et survenue simultanée de l'autre cas.
